# EUROPÄISCHE PATENTSCHRIFT

(11) **EP 3 593 940 B1**
(45) Veröffentlichungstag und Bekanntmachung des Hinweises auf die Patenterteilung: **28.06.2023**
(21) Anmeldenummer: 19185313.4
(22) Anmeldetag: 09.07.2019
(51) Int. Cl.: B23Q 1/54, B23C 1/12

(54) **WERKZEUGMASCHINE**
MACHINE TOOL
MACHINE-OUTIL

(30) Priorität: 09.07.2018 EP 18182338
(43) Veröffentlichungstag der Anmeldung: 15.01.2020
(73) Patentinhaber: Reiden Technik AG, 6260 Reiden (CH)
(72) Erfinder: STÄUBLE, Andreas, 6252 Dagmersellen (CH); KAUFMANN, Rafael, 6252 Dagmersellen (CH)
(74) Vertreter: Liebetanz, Michael

(56) Entgegenhaltungen:
- EP-A1- 0 408 264
- EP-A1- 2 295 200
- WO-A1-02/24401
- DE-A1-102006 032 443
- IT-A1- UB20 161 014
- US-A- 5 413 439

## Beschreibung

### TECHNISCHES GEBIET

Die vorliegende Erfindung betrifft eine Werkzeugmaschine zur mehrachsigen Bearbeitung eines Werkstücks in einer Aufspannung umfassend einen Maschinenständer, einen mittels einer Konsole am Maschinenständer beweglich angeordneten Werkstücktisch und einen an dem Maschinenständer beweglich steuerbar verfahrbaren Werkzeugkopf, insbesondere ein Fräskopf.

### STAND DER TECHNIK

Eine solche Werkzeugmaschine ist aus der EP 0 721 819 bekannt, bei der der Werkzeugkopf ein Vertikalfräskopf ist, der auf einem Kreuzschlitten vertikal verfahrbar befestigt ist, wobei der Kreuzschlitten selber in der Horizontalebene verfahrbar an dem Maschinenständer befestigt ist. Der Werkstücktisch ist beim Stand der Technik auf einer Tragkonsole befestigt, die in einem Winkel von 45 Grad nach unten auf einem Auflager des Maschinenständers, insbesondere am Fräsbalken, befestigt ist. Somit ist der Werkstücktisch in seiner Orientierung um die Achse des Auflagers drehbar. Er ist insbesondere nicht immer horizontal angeordnet sondern kann gegenüber der Bearbeitungsachse des Vertikalfräskopfs gedreht werden.

Eine solche Werkzeugmaschine gemäss dem Stand der Technik weist nebst der Spindel des Vertikalkopfes zwei Drehachsen und drei translatorische Achsen auf: eine Bearbeitungsdrehachse des Werkstücktisches und eine dritte Drehachse, gemäss der die Drehachse des Werkstücktisches verschwenkt wird. Hierbei ist nachteilig, dass die beiden präzis zu verstellenden langsamen Drehachsen einer Hintereinanderschaltung auf einer Tragkonsole bedürfen.

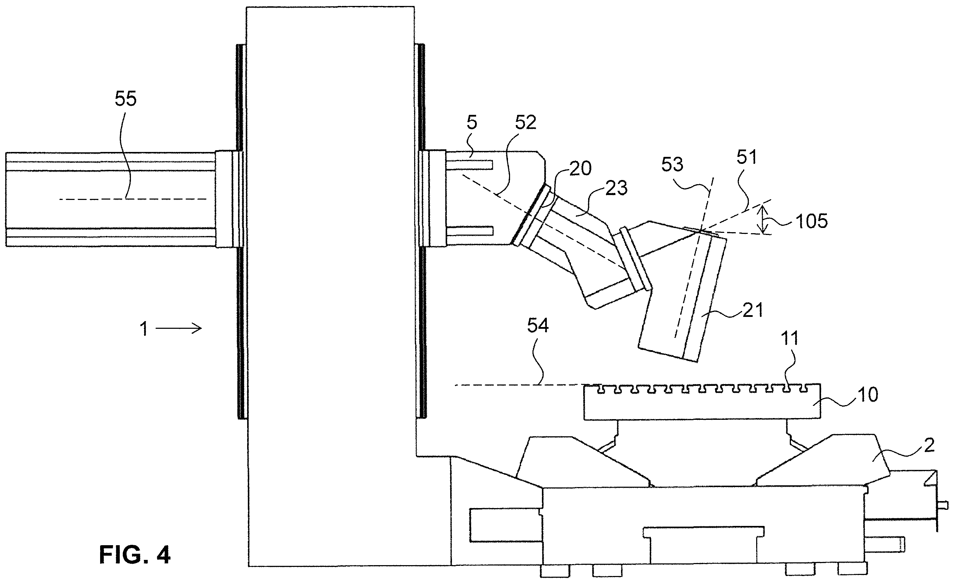

Bei der Anordnung gemäss der EP 0 721 819 ist es nicht möglich, sogenannte negative Winkel zu fräsen, also aus einer Richtung, die mit der Drehachse des Werkstücktisches einen spitzen Winkel bildet, wie es als Winkel 303 aus der Fig. 4 der Figurenbeschreibung hervorgeht.

Aus dem Stand der Technik sind weiter ein sogenannter Gabelkopf bekannt, wie aus dem Prospekt der Firma Zimmermann (www.f-zimmermann.com). Dabei ist eine Schwenkachse rechtwinklig zur Arbeitsspindel angeordnet und sie kann somit beliebig um diese Achse geschwenkt werden, was in der Folge auch bei nur einer Achse negative Bearbeitungslagen zulässt. Der Nachteil des Standes der Technik liegt in einer recht massiven Ausführung bei geringer Stabilität. Die Bearbeitungskraft wird in jedem Fall bei diesen Winkeln bis mehrmals um 90° umgelenkt. Der Gabelkopf ist dafür zwar beidseitig gelagert, aber das schränkt die Bearbeitungsmöglichkeiten ein.

Aus der WO 2005/108 007 ist ein Werkzeugmaschine mit einigen Merkmalen des Oberbegriffs des Anspruchs 1 bekannt, die eine genaue Einstellung der horizontalen Bearbeitung ohne die Notwendigkeit der koordinierten gleichzeitigen Verschiebung von zwei Achsen zueinander erfordert.

Die ES 2 546 637 A1 zeigt eine Montage des Winkelgehäuses, wie sie auch in der WO 02/24401 zu erkennen ist. Dieses Winkelgehäuse ist fix an dem verfahrenbaren Schlitten fix montiert, so dass nur eine Drehachsenebene vorgesehen ist.

Aus der EP 2 371 482 ist eine Werkzeugmaschine zur mehrachsigen Bearbeitung eines Werkstücks in einer Aufspannung bekannt, bei der der Werkzeugkopf an einem Winkelgehäuse um die longitudinale Achse des Winkelgehäuses drehbar befestigt ist, und wobei die longitudinale Achse des Winkelgehäuses gegenüber der Drehachse des Werkstücktisches in einer zur Ebene des Werkstücktisches nicht parallelen Ebene verläuft.

Aus der EP 0 408 264 A1 ist eine Werkzeugmaschine mit den Merkmalen des Oberbegriffs des Anspruchs 1 bekannt.

Aus der DE 102 52 086 ist eine Werkzeugmaschine bekannt, bei der eine erste Drehachse horizontal vorgesehen ist, während eine zweite Drehachse in einem 45 Grad Winkel zur Horizontalen angeordnet ist.

Die US 5,413,439 A zeigt eine universelle Spindelkopfvorrichtung für Werkzeugmaschinen, umfassend einen Spindelkopf mit einer Hauptspindel, einen eingebauten Motor, eine erste rotierende Spindel, deren Ende an dem Spindelkopf befestigt ist und einen Neigungswinkel von 45 Grad zur Hauptspindel der Werkzeugmaschine aufweist und deren Mitte einen hohlen Durchgang hat; eine zweite rotierende Spindel, deren axiale Mittellinie auf einer Ebene liegt, die mit der axialen Mittellinie der Hauptspindel und der ersten rotierenden Spindel identisch ist, und die in einem Neigungswinkel von 45 Grad zur Spindelmitte der ersten rotierenden Spindel erscheint; und eine Antriebsvorrichtung zum Antreiben des Spindelkopfes, um ihm zu ermöglichen, sich zentriert um die erste rotierende Spindel und die zweite rotierende Spindel zu drehen und in der Richtung umzuschalten, um eine Fünf-Seiten-Bearbeitung des Werkstücks durchzuführen.

Die EP 2 295 200 A1 offenbart einen Werkzeugkopf mit einem Spindelkörper, der zwei über eine korrespondierene Kopplung drehbar miteinander verbundene Elemente aufweist, wobei das erste Element eine erste Längsachse und das zweite Element eine zweite Längsachse aufweisen, die je nach Drehstellung von einer gestreckten Lage in eine abgewinkelte Lage überführbar sind. An dem zweiten Element kann eine Motorspindel befestigt werden und dient auch zum Befestigen eines angetriebenen Fräswerkzeugs.

Die DE 10 2006 032 443 A1 beschreibt eine Vorrichtung zum Positionieren eines Werkzeugs gegenüber einem Werkstück, wobei zwischen einer Basis der Vorrichtung und dem Werkzeug oder dem Werkstück eine erste Schwenkachse oder eine zweite Schwenkachse hintereinander geschaltet sind und wobei ein Winkel zwischen den beiden Schwenkachsen genauso groß ist wie ein Winkel zwischen der zweiten Schwenkachse und einer Hauptrichtung eines um die zweite Schwenkachse verschwenkbaren Anschlusselements, wobei die beiden Winkel maximal 40 Grad betragen.

### DARSTELLUNG DER ERFINDUNG

Ausgehend von diesem Stand der Technik liegt der Erfindung die Aufgabe zu Grunde, eine verbesserte Werkzeugmaschine anzugeben, welche eine höhere Präzision in der Einstellung von Werkstücktisch und Werkzeug aufweist. Ferner ist es Ziel der Erfindung die Bearbeitung von Winkeln kleiner als 0 Grad in einfacher Weise zu gestatten, so dass mit einem Werkzeug auf einer als Rohling vorgesehenen Teil-Kugel jeweils in den meisten Werkzeugpositionen dieses Werkzeug normal auf der Rohlingoberfläche ausgerichtet werden kann. Schliesslich soll die Einstellung des Werkzeuges in horizontaler Ausrichtung zum Werkzeugtisch verbessert und vereinfacht werden.

Die Lösung der Ziele der vorliegenden Erfindung ist durch die Merkmale des Anspruchs 1 gekennzeichnet.

Eine Werkzeugmaschine zur mehrachsigen Bearbeitung eines Werkstücks in einer Aufspannung umfasst einen Maschinenständer, einen am Maschinenständer angeordneten Werkstücktisch und einen an dem Maschinenständer befestigten Werkzeugkopflialter, der für den Einsatz eines sich um eine Bearbeitungsachse des Werkzeugkopflialters drehenden Werkzeuges ausgestaltet ist. Der Werkstücktisch hat eine Tischebene gegenüber der das weiter unten definierte Winkelgehäuse ausgerichtet ist. Dabei ist der Werkzeugkopfhalter in einer Relativbewegung gegenüber dem Werkstücktisch in drei zueinander senkrecht verlaufenden Richtungen beweglich steuerbar verfahrbar. Nun ist ein Winkelgehäuse an dem Maschinenständer befestigt, wobei an einem Ende des Winkelgehäuses der Werkzeugkopfhalter um eine Einstellungsachse drehbar an dem Winkelgehäuse befestigt ist. Zusätzlich ist das Winkelgehäuse um eine Winkelgehäuseachse drehbar an dem Maschinenständer befestigt, wobei die Winkelgehäuseachse in einem von der Tischebene, zumeist der Horizontalen oder der Vertikalen, abweichenden Winkel ausgerichtet ist, und wobei die Winkelgehäuseachse und die Einstellungsachse in einem Winkel ungleich 0 Grad zueinander stehen. Ferner ist der Winkel zwischen Achsen 51 und 52 gleich wie der Winkel zwischen Achse 51 und 53, damit stufenlos alle Positionen auf der als Modell herhaltenden Werkstück-Kugel angefahren werden können. Dazu ist ein Winkel (ungleich 0 Grad) zwischen Achse 52 und 55 vorhanden, damit die Achse 53 möglichst weit nach vorne geneigt werden kann. Dies bringt beim Bearbeiten von Werkstücken grosse Vorteile gegenüber dem Stand der Technik.

Der Werkzeugkopfhalter hält ein Bearbeitungswerkzeug, welches unter anderem ein Fräser oder ein Drehmeissel sein kann.

Bei der EP 2 371 482 war ein Winkelgehäuse am Maschinenständer vorgesehen, an dem der Werkzeugkopfhalter gegenüber der horizontalen Achse schräg und aus der Horizontalen geneigt angeordnet war. Hier ist nun zusätzlich das Winkelgehäuse um eine gegenüber der Horizontalen geneigten Achse drehbar. Dies ermöglicht zum einen das Einstellen eines weitergehenden Winkelbereichs und schafft zum anderen die Möglichkeit, die horizontale und die vertikale Bearbeitungsposition entsprechend der Drehachse eines Werkzeugs durch die Einstellung der Drehachse vom Werkzeugkopfhalter und vom Winkelgehäuse unabhängig von den tatsächlichen Fertigungswinkeln für die Drehachsen anzufahren.

Die Fräskopfanordnung nach der EP 0 408 264 A1 erlaubt es nicht, alle gewünschten Positionen anfahren. Die Definition von gewünschten Positionen geht von einem zu bearbeitenden Werkstück in Kugelform aus, nach dessen Positionierung in der Werkzeugmaschine das Werkzeug an jeder Stelle im "Normalenvektor" positionierbar ist, also die Spitze des Werkzeugs, e.g. einer Fräse, senkrecht auf diesem zu bearbeitenden Werkstück in Kugelform steht. Mit der Anordnung nach EP 0 408 264 A1 ist dies nicht möglich.

Der Werkzeugkopf kann gegenüber dem Maschinenständer in einer oder zwei der drei, und der Werkstücktisch gegenüber dem Maschinenständer in zwei beziehungsweise einer der drei zueinander senkrecht verlaufenden Richtungen beweglich steuerbar verfahrbar sein.

Erfindungsgemäß weist die Winkelgehäuseachse des Winkelgehäuses gegenüber der Horizontalen einen geneigten Befestigungswinkel zwischen 10 und 80 Grad, bevorzugter zwischen 15 und 75 Grad und insbesondere zwischen 30 und 60 Grad auf.

Vorteilhaft sind somit beispielsweise auch Winkel von 45 Grad.

Die Winkelgehäuseachse des Winkelgehäuses und die Einstellungsachse des Winkelgehäuses können in einer Ebene angeordnet sein.

Die Winkelgehäuseachse des Winkelgehäuses und die Einstellungsachse des Winkelgehäuses können auch windschief zueinander angeordnet sein.

Die Winkelgehäuseachse des Winkelgehäuses kann die Bearbeitungsachse des Werkzeugkopfhalters im Bereich dessen vorderer Endfläche schneiden.

Obwohl ein Vorteil der Werkzeugmaschine nach der Erfindung darin liegt, dass durch den erweiterten Winkeleinstellbereichs für die Werkzeuge, wie eine Bearbeitung von Hinterschneidungen, lange Werkstücke direkt durch ein Verfahren von diesen gegenüber dem Werkzeug entlang von drei vertikal zueinander stehenden Achsen ohne ein Umspannen bearbeitbar sind, kann der Werkzeugtisch auch für eine Rotation um eine vertikal zu seiner Oberfläche stehende Drehachse ausgestaltet sein.

Diese Bearbeitungsoptionen entstehen durch den Winkel am Balken beziehungsweise dem Horizontalschlitten, der allerdings auch in einer anderen Richtung ausgerichtet sein kann. Im Allgemeinen ist er parallel zur Tischebene ausgerichtet. Der Vorteil von diesem Winkel im Balken ist die Verlagerung des anfahrbaren Bereichs. Eine Geometrie, wie sie in ES 2 546 637 A1 gezeigt worden ist, kann mit dem System 30° in der oberen Position nach vorne fahren und ebenfalls 30° in der unteren Position nach vorne. Durch den Winkel im Balken und Verschiebeschlitten verschieb die vorliegende Erfindung diesen Bereich in der oberen Position weiter nach vorne. Dafür ist die Anlage im Gegenzug nur fähig, im unteren Bereich weniger weit zu fahren als der Stand der Technik ES 2 546 637 A1. Diese Verlagerung ist aber für das Fräsen wertvoll. Die Werkstücke sind üblicherweise auf dem Frästisch aufgespannt und die 30° in der unteren Position können üblicherweise nicht zum Bearbeiten eingesetzt werden, da der Fräskopf mit dem Frästisch oder mit dem Werkstück kollidiert und üblicherweise sehr wenige Bearbeitung an den Werkstücken in solchen Winkeln vorhanden sind. Es ist viel wertvoller, den anfahrbaren Bereich wie bei der vorliegenden Erfindung möglichst weit nach vorne zu verlagern, da diese Winkel beim Bearbeiten viel öfter gebraucht werden, als unteren Winkel bei ES 2 546 637 A1.

Weitere Ausführungsformen sind in den abhängigen Ansprüchen angegeben.

Die Erfindung gestattet die Realisierung einer hochpräzisen und zugleich äusserst kraftvollen Werkzeugmaschine. Durch die Ausstattung der Fräsmaschine mit einem Schwenkkopf gestattet dies im Zusammenhang mit einem Rundtisch eine Fünfseitenbearbeitung.

Zusätzlich kann der Winkelversatz nach der vorliegenden Erfindung noch mit der Lehre der EP 2 371 482 kombiniert werden, so dass der Schwenkbereich von 180° noch weiter erhöht werden kann. Zum Beispiel kann nach der EP 2 371 482 der Winkel der Schwenkachse der A-Achse nicht bei 45° sondern bei 53° angeordnet sein, was bedeutet, dass der Schwenkbereichs von 180° (A-Achse: 0-90°; B-Achse: 2×90°= 180°) auf 212° (A-Achse: 0-106°; B-Achse: 2×106°=212°) erweitert wird.

Wenn vorteilhafterweise die Schwenkachse um die Vertikalachse herum noch um einen seitwärtigen Winkel gedreht wird, dass also dann Hauptachse des Winkelgehäuses weder in einer horizontal ausgerichteten noch in einer vertikal ausgerichteten Ebene gelegen ist, kann die Umlenkung der Kraft auf einen kleineren Winkel beschränkt werden. Dafür müssen im Gegenzug längere Verfahrwege realisiert werden, um die gleichen Bearbeitungsmöglichkeiten zu erreichen. Ein Kompromiss liegt bei einem seitwärtigen Winkel von 25 bis 30, insbesondere um 28 Grad.

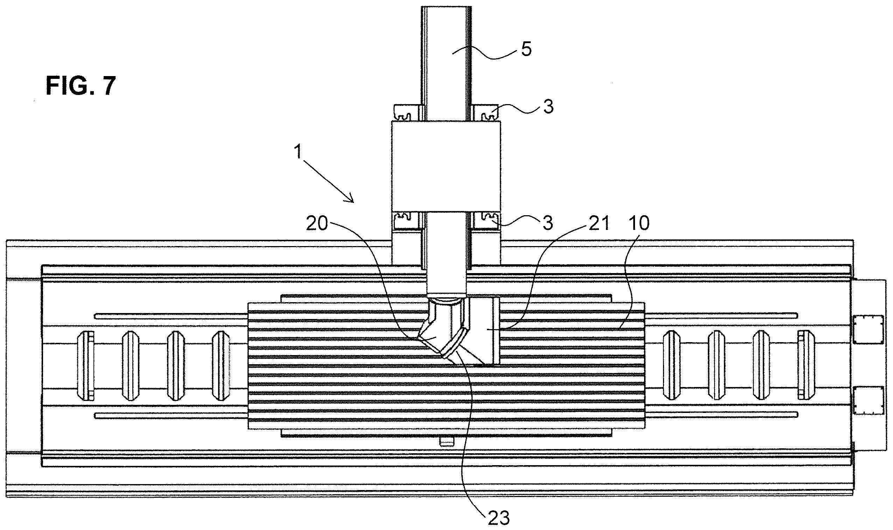

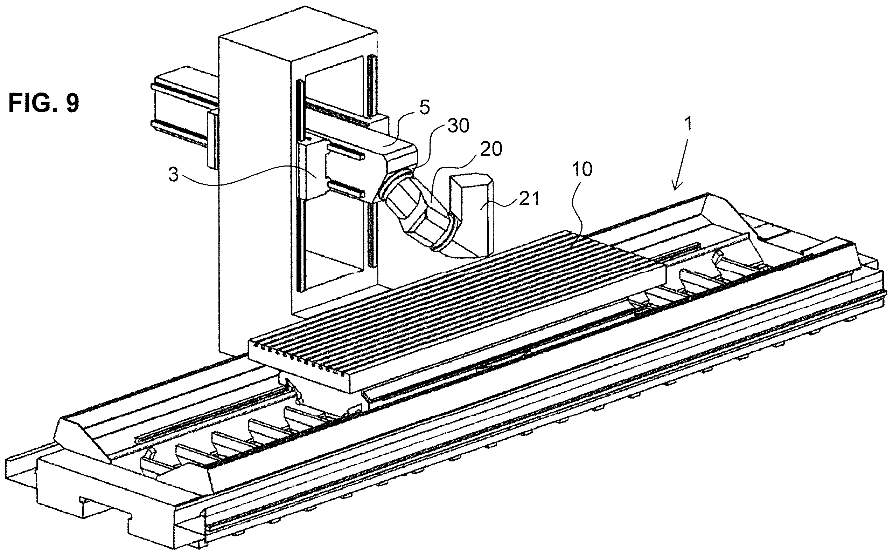

Ein Vorteil der Anordnung nach der Erfindung liegt auch darin, dass Bearbeitungswinkel doppelt angefahren werden können, was die Zugänglichkeit zum Werkstück massiv verbessert. Dies gilt zum Beispiel für die zwei Positionen, bei welchen die Arbeitsspindel vertikal ausgerichtet ist. Dies entspricht zum einen der Position der Fig. 9 auf der rechten Seite, zu der eine entsprechende links ausgerichtete Position der Arbeitsspindelmöglich ist. Das Gleiche gilt für die Bearbeitung in der Horizontalen, wie sie "rechts" in der Fig. 7 dargestellt ist, zu der es eine entsprechende Positionierung "links" gibt.

Da die Werkzeugmaschine nach der Erfindung mit einer NC A- und B-Achse ausgestattet ist, können alle Winkelfehler der Mechanik durch die Kombination der beiden Drehachsen kompensiert werden. Dadurch steht das Werkzeug immer im gewünschten Bearbeitungswinkel.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: zeigt eine perspektivische Darstellung einer Werkzeugmaschine gemäss einem ersten Ausführungsbeispiel der Erfindung;
- Fig. 2: zeigt eine Seitenansicht der Werkzeugmaschine gemäss Fig. 1 mit schräg ausgerichtetem Fräskopf;
- Fig. 3: zeigt eine Draufsicht auf die Werkzeugmaschine gemäss Fig. 1;
- Fig. 4: zeigt eine Seitenansicht der Werkzeugmaschine gemäss Fig. 1 mit einem einen negativen Winkel bearbeitenden Fräskopf;
- Fig. 5: zeigt eine Vorderansicht auf den Werkstücktisch mit dem Fräskopf nach Fig. 4;
- Fig. 6: zeigt eine perspektivische Ansicht der Werkzeugmaschine gemäss Fig. 1 mit einem horizontal ausgerichteten Fräskopfs;
- Fig. 7: zeigt eine Draufsicht auf die Werkzeugmaschine gemäss Fig. 6;
- Fig. 8: zeigt eine Vorderansicht auf den Werkstücktisch mit dem Fräskopf nach Fig. 6;
- Fig. 9: zeigt eine perspektivische Ansicht der Werkzeugmaschine gemäss Fig. 1 mit einem vertikal ausgerichteten Fräskopf;
- Fig. 10: zeigt eine Seitenansicht auf den Werkstücktisch mit dem Fräskopf nach Fig. 9;
- Fig. 11: zeigt eine Seitenansicht eines zweiten Ausführungsbeispiels mit einer weiteren gegenüber der Fig. 1 leicht abgewandelten Werkzeugmaschine mit schräg ausgerichtetem Winkelgehäuse; und
- Fig. 12: zeigt eine Seitenansicht eines dritten Ausführungsbeispiels mit einer weiteren gegenüber der Fig. 1 leicht abgewandelten Werkzeugmaschine mit schräg ausgerichtetem Winkelgehäuse.

### BESCHREIBUNG BEVORZUGTER AUSFÜHRUNGSFORMEN

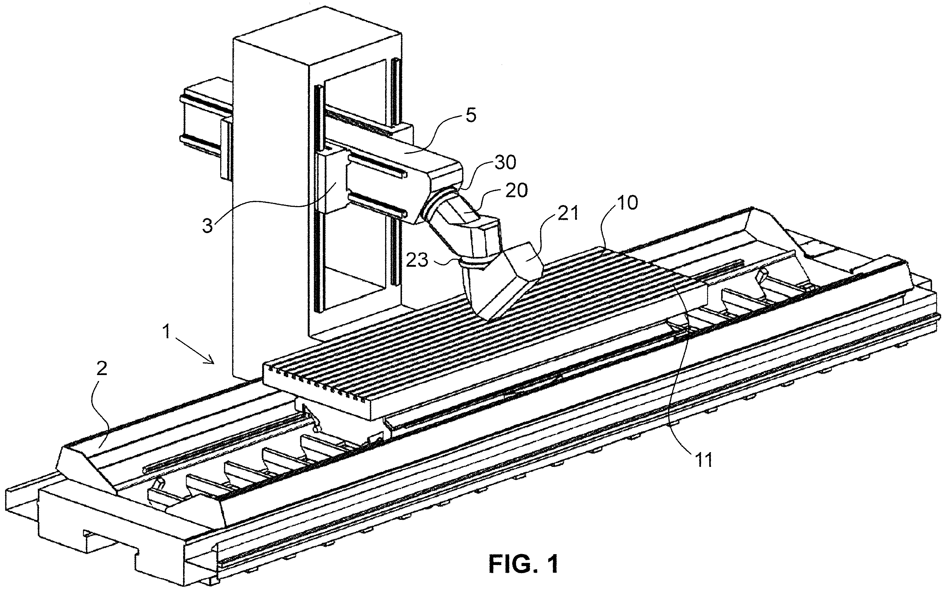

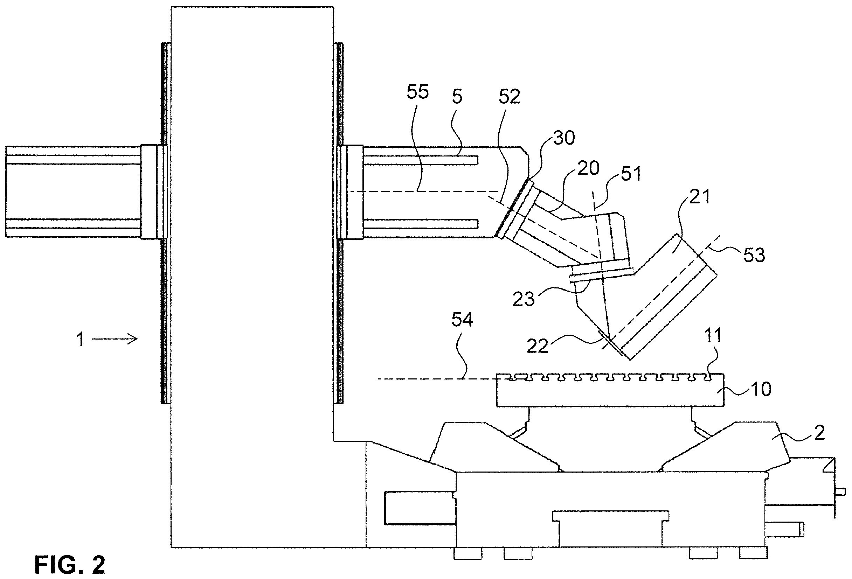

Die Fig. 1 zeigt eine Werkzeugmaschine gemäss einem Ausführungsbeispiel der Erfindung. Die Werkzeugmaschine umfasst einen Maschinenständer 1, an welchem die beweglichen Teile befestigt sind. Dazu gehört die Konsole 2, auf der der Werkstücktisch 10 verfahrbar befestigt ist. Der Werkstücktisch 10 ist auf der Konsole 2 in horizontaler Richtung entsprechend Tischebene 54 (siehe Fig. 2) verfahrbar.

Der Werkstücktisch 10 ist im Ausführungsbeispiel eckig, hat eine horizontale Oberfläche und diese weist zur Befestigung eines Werkstückes auf diesem T-Nuten 11 auf. In anderen Ausführungsformen kann der Tisch 10 um eine vertikale Achse drehbar sein. Hier ist er es nicht, weil die Werkzeugmaschine insbesondere für lange Werkstücke vorgesehen ist, die nicht auf dem Werkzeugtisch 10 gedreht werden. Damit können sie entweder in einem Arbeitsgang bearbeitet werden oder sie müssten umgespannt werden. Hier liegt der Vorteil der Erfindung darin, dass solche Umspannarbeiten weitestgehend vermieden werden können. Auf dem Werkstücktisch 10 ist ein in den Zeichnungen nicht dargestelltes Werkstück befestigbar, welches dann mit dem an einem Fräskopf 21 befestigten Fräswerkzeug (ebenfalls nicht dargestellt) in verschiedenen Winkeln bearbeitbar ist. In der Position der Fig. 1 ist dies eine Bearbeitung schräg von oben im rechten Winkel zur Längsrichtung des Tisches 10.

An dem Maschinenständer 1 ist ein Kreuzschlitten 3 vertikal verfahrbar angeordnet. Der vertikale Kreuzschlitten 3, der an Rollenführungen am Maschinenständer 1 befestigt ist, ist auf der anderen Seite mit einem horizontal verfahrbaren Kreuzschlitten 5 verbunden, der hier quer zur Längsrichtung des Tisches verfahrbar ist. Damit können alle Positionen X, Y und Z durch die drei Linearverschiebungen des vertikalen Kreuzschlittens, der horizontalen Kreuzschlittens und des Tisches angefahren werden.

Mit dem horizontalen Kreuzschlitten 5 ist der weiter unten zu beschreibende Fräskopfträger 20 drehbar verbunden. Der Fräskopfträger 20 ist somit indirekt am Maschinenständer befestigt. Dabei ist die Drehachse 52 (siehe Fig. 2) des Fräskopfträgers 20 schräg nach unten geneigt. An dem gegenüberliegenden freien Ende der Fräskopfträgers 20 ist der drehbare Werkzeugkopfhalter 21 angebracht, der sich um eine Achse 51 drehen kann, die gegenüber der Drehachse 52 einen Winkel zwischen 20 und 75 aufweist, insbesondere 46 Grad. Die Hauptachse des Fräskopfträgers 20 wird auch Längsachse oder longitudinale Achse 52 desselben genannt. Die Drehachse des (nicht dargestellten) Werkzeuges hat das Bezugszeichen 53 und ist in der Fig. 2 links nach unten auf den Tisch 10 hin ausgerichtet.

Bei dem hier dargestellten Ausführungsbeispiel ist also das Winkelgehäuse oder Fräskopfträger 20 gegenüber dem Maschinenständer 1 sowohl horizontal als auch vertikal verfahrbar. In der in der Fig. 1 dargestellten Position des Fräskopfs 21 bedeutet dies, dass der Fräskopf 21 sowohl entlang seiner Achse 53 verschiebbar ist (X,Y) als auch in einer Relativbewegung seitlich entlang der Hauptachse des Tisches 10 verfahrbar ist (Z).

Es ist dabei natürlich unerheblich, ob an dem Maschinenständer 1 zuerst der vertikal verfahrbare Kreuzschlitten 3 und anschliessend der horizontal verfahrbare Kreuzschlitten 5 befestigt ist, an dem dann der Fräskopfträger 20 angeordnet ist. Die Anordnung der beiden Kreuzschlitten 3 und 5 kann auch genau andersherum vorgesehen sein, wie z.B. in der EP 0 721 819 dargestellt. Wesentlich ist, dass die Bewegung des Winkelgehäuses 20 sowohl vertikal als auch horizontal verschieblich ist. Ebenfalls wesentlich ist, dass der horizontale Abstand der Drehachse 100 des Werkstücktisches 10 von dem Werkzeugkopf 20 durch die Konsole 2 veränderbar ist. Mit anderen Worten die Maschine gemäss der Erfindung verfügt über drei senkrecht zueinander angeordnete translatorisch bewegbare Antriebe, so dass das Werkzeug (das heisst ebenfalls der Werkzeugkopfhalter 21) gegenüber einem Werkstück (das heisst ebenfalls gegenüber dem Werkstücktisch 10) in den Raumdimensionen verfahrbar ist, also beispielhaft auf einer als Teil einer Kugel vorgesehenen Werkstücks das Werkzeug immer senkrecht zur Kugeloberfläche positionierbar ist.

Dabei ist die eine translatorische Verschiebung mit dem Werkstücktisch 10 gekoppelt. Die beiden anderen translatorische Verschiebungen sind dem Winkelgehäuse 20 zugeordnet. Bei einer anderen Ausführungsform können auch zwei Verschiebungen mit dem Werkstücktisch 10 gekoppelt sein, zum Beispiel die Verfahrbarkeit in der horizontalen Ebene und nur die vertikale Verschiebung dem Winkelgehäuse 20 zugeordnet sein. Prinzipiell können auch alle drei Verschiebungen an einem Element, also Werkstücktisch 10 oder Winkelgehäuse 20, realisiert sein. Aus Stabilitätsgründen ist eine 2:1 Verteilung aber bevorzugt, im Gegensatz zu einer Verfahrbarkeit von allen drei Achsen von entweder dem Winkelgehäuse 20 oder dem Werkzeugtisch 10.

An dem Winkelgehäuse 20 ist der Werkzeugkopfhalter 21 über einer Fläche 30 befestigt, durch die eine Drehachse 52 definiert wird. In der Beschreibung wird statt des allgemeinen Begriffes Werkzeugkopfhalter und Winkelgehäuse auch der Begriff Fräskopf bzw. Fräskopfträger verwendet, da ein an dem Halter eingesetztes Werkzeug, welches um die Achse 53 rotiert, insbesondere ein spezielles Werkzeug wie ein Fräser sein kann. Es sind aber auch andere spanende Bearbeitungswerkzeuge zu verstehen.

Zusätzlich bestehen Drehbewegungen der Maschine. Dies sind die langsame Drehung des Winkelgehäuses 20 um seine schräg geneigte Achse 52 am Kreuzschlitten 5 einerseits und die Drehung des Fräskopfs 21 mit dem eingesetzten Werkzeug (hier nicht dargestellt) um die Achse 51 andererseits.

Die Fig. 2 zeigt nun einen Ausschnitt der Werkzeugmaschine gemäss Fig. 1 mit dem Werkstücktisch 10 und seinen T-Nuten 11, wobei die Elemente 20 und 21 nach vorne ausgerichtet sind. Die Achse 51 des Winkelgehäuses 21 ist bei der dargestellten Position des Ausführungsbeispieles nicht senkrecht zum Bearbeitungstisch 10, da die Summe der Winkel der Achse 52 zur Horizontalen zuzüglich der Neigung der Achse 51 des Werkzeug trägers zwischen 75 und 87 Grad, insbesondere zwischen 80 und 85 Grad sein kann. Die Bearbeitungsrichtung des Werkzeuges entspricht dann der Drehachse 53, hier dargestellt in einem Winkel von 46 Grad.

Dabei ist die Achse 53 auf den Balken oder horizontalen Kreuzschlitten 5 ausgerichtet und erlaubt damit einen unterhalb der Fläche 22 angeordneten Werkzeug eine Bearbeitung von Winkeln kleiner 0 Grad, wenn mit 0 Grad die Senkrechte über dem Werkzeugtisch 10 bezeichnet wird.

Erfindungsgemäß ist dabei der Winkel zwischen den Achsen 52 und 51 gleich zu dem Winkel zwischen den Achsen 51 und 53; bei dem Ausführungsbeispiel nach der Fig. 2 jeweils 53 Grad.

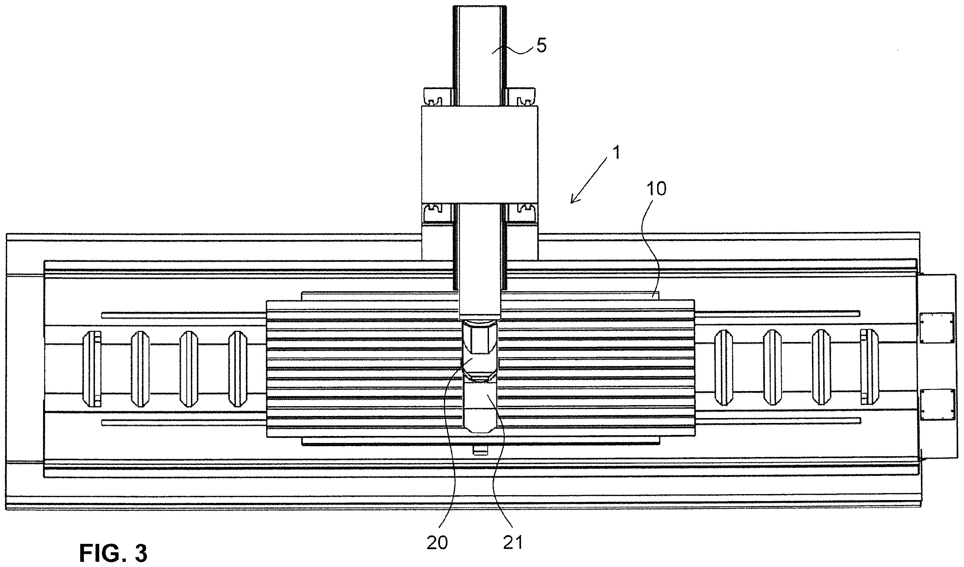

Die Fig. 3 zeigt eine Draufsicht auf die Werkzeugmaschine nach Fig. 1, wobei erkennbar ist, dass alle Achsen 51, 52 und 53 in einer gleichen Ebene liegen, die der Bewegungsebene des horizontalen Kreuzschlittens 5 entspricht.

Die Fig. 4 zeigt eine Seitenansicht der Werkzeugmaschine gemäss Fig. 1 mit einem einen negativen Winkel bearbeitenden Fräskopf. Insofern ist die Darstellung zu der Darstellung der Fig. 2 ähnlich.

Die Achse 53 des Werkzeugkopfhalters 21 schneidet hier die horizontale Achse 55 des horizontalen Kreuzschlittens 5 unter einem negativen Winkel, von unten nach oben, was nichts anderes bedeutet, als dass der Winkel 105, angedeutet durch einen Doppelpfeil, ein spitzer Winkel ist, der eine Bearbeitung eines Werkstückes von unten her gestattet. Diese Position wird durch ein Weiterdrehen des Werkzeugkopfes 21 gegenüber dem Winkelgehäuse 20 erreicht, welcher in einem weiteren Winkel an dem horizontalen Kreuzschlitten 5 befestigt ist. Gleichzeitig verfährt der horizontale Kreuzschlitten 5 nach hinten in Blickrichtung der Fig. 3. Sinnvoll sind negative Winkel von 10 bis 30 Grad, also die Erreichbarkeit eines Wertes des spitzen Winkels 105 von 80 bis 60 Grad gegenüber der Vertikalen.

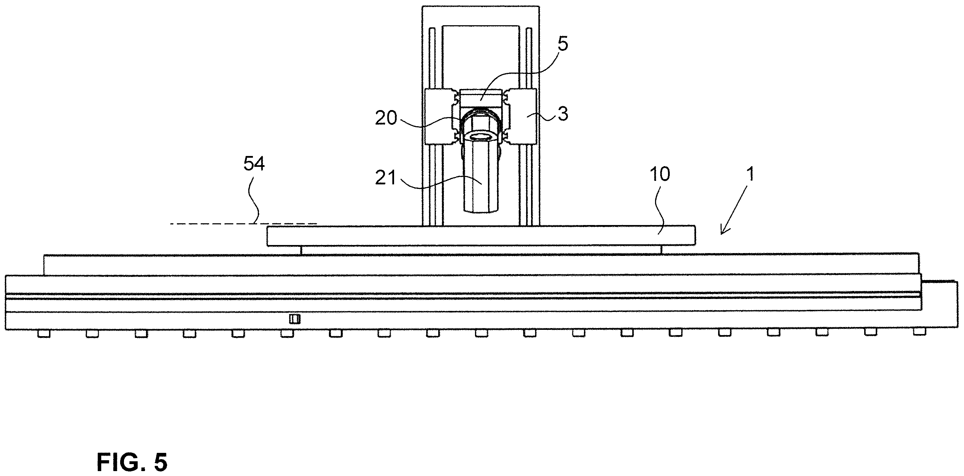

Die Fig. 5 zeigt eine Vorderansicht des Werkstücktisches 10 nach Fig. 4, in der zu erkennen ist, dass alle Werkzeugelemente 20 und 21 in der Verlängerung des Arms des Kreuzschlittens 5 angeordnet sind. Die Querplatte 3 des vertikalen Kreuzschlittens 3 ist mit Hilfe des vertikalen Kreuzschlittens 2 gegenüber dem Werkstück 10 hoch und herunter verfahrbar.

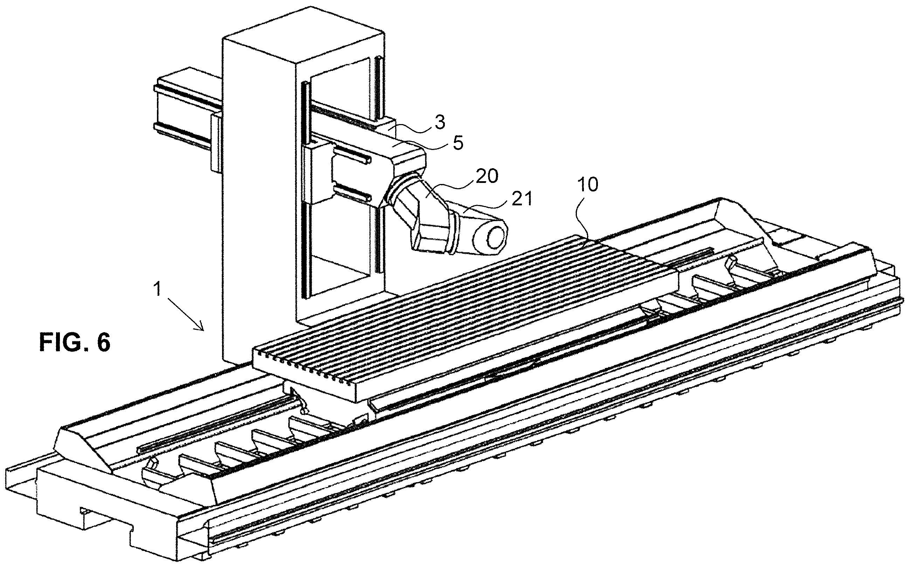

Die Fig. 6 zeigt eine perspektivische Ansicht der Werkzeugmaschine gemäss Fig. 1 mit einem horizontal ausgerichteten Fräskopf. Mit anderen Worten, die Drehachse 53 des Werkzeugs ist in Blickrichtung der Fig. 6 auf der rechten Seite horizontal. Diese Einstellung ergibt sich aus der Summe der Winkel des Winkelgehäuses, der gegenüber dem horizontalen Kreuzschlitten 5 geneigt ist, und des inhärenten Winkels des Winkelgehäuses 20, hier durch die Drehung um die Achse 52 so ausgerichtet, dass die Anflanschfläche des Fräskopfs 21 seitlich nach unten geneigt ist, wobei dann die Drehachse 53 des anzubringenden Werkzeugs horizontal ist. Dabei ist diese Einstellung möglich unabhängig davon, welche genauen Winkel die Drehachse 51 des Fräskopfs 21 und die Drehachse 52 des Winkelgehäuses 20 aufweisen

Die Fig. 7 zeigt eine Draufsicht auf die Werkzeugmaschine nach Fig. 6. Die nach unten ausgerichtete Anflanschfläche 30 ist kombiniert mit einer nach in Blickrichtung rechts ausgerichteten Vorderseite 23 des Winkelgehäuses, so dass der Fräskopf in die Horizontale gedreht werden kann.

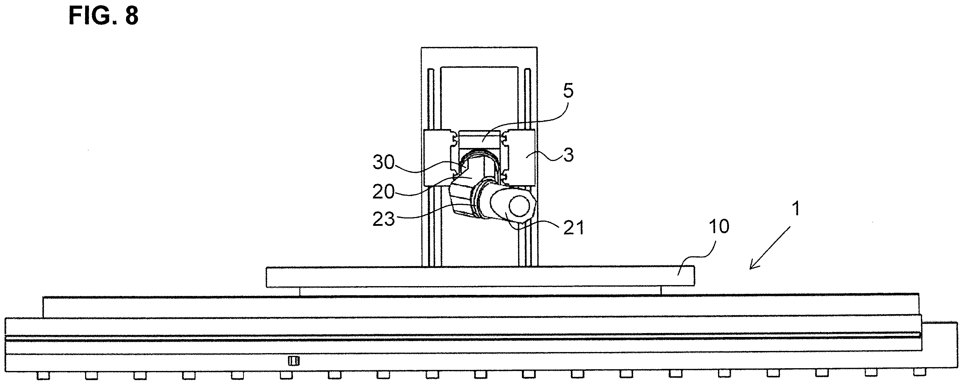

Die Fig. 8 zeigt eine Vorderansicht auf den Werkzeugtisch 1 mit dem Fräskopf 21 nach Fig. 6, aus der erkennbar ist, dass die Horizontale der Werkzeugdrehachse 53 unterhalb der Longitudinalachse des horizontalen Schlittens 5 verläuft.

Aus den Figuren ergibt sich in vorteilhafter Weise die Bearbeitbarkeit von negativen Winkeln, wie sie in der Fig. 4 dargestellt sind, da das Winkelgehäuse 20 gegenüber der Vertikalen (hier: nach unten) geneigt (Achse 55 zu Achse 52) und gegebenenfalls seitlich schräg (wie in der EP 2 371 482) angeordnet ist. Dadurch ist es möglich, einen an diesem Winkelgehäuse 20 befestigten Bearbeitungskopf in eine Stellung zu bewegen, bei der er gegenüber der Oberfläche des Werkstücktisches 10 in einem spitzen Winkel (Achse 53 zu Oberfläche Tisch 10) ansetzt und somit gegenüber dieser Oberfläche negative Bearbeitungswinkel zulässt. Gleichzeitig ist durch die Verteilung der die Bearbeitungsposition vorgebenden beiden Drehantriebe auf Werkzeugbefestigung und Werkstückbefestigung eine hohe Stabilität der Maschine erreichbar.

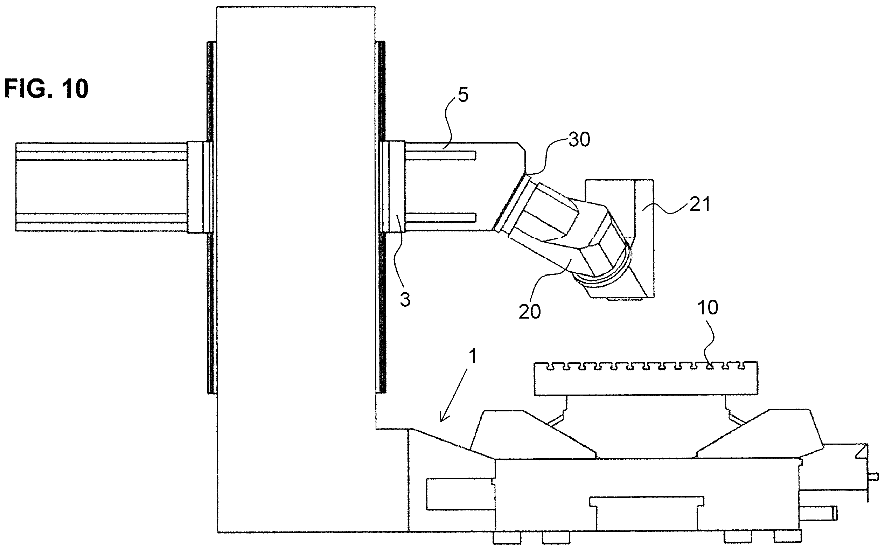

Die Fig. 9 zeigt eine perspektivische Ansicht der Werkzeugmaschine gemäss Fig. 1 mit einem vertikal ausgerichteten Fräskopf 21 und Fig. 10 zeigt eine Seitenansicht auf den Werkzeugtisch 1 mit dem vertikal ausgerichteten Fräskopf 21;

Der Fachmann versieht die Werkzeugmaschine zur mehrachsigen Bearbeitung eines Werkstücks gemäss der Erfindung natürlich mit einer ihm bekannten elektronischen Ansteuerungs- und Kontrolleinheit auf, mit der die fünf oder sechs Einstellungsantriebe (drei translatorische Antriebe und zwei bis drei Drehantriebe, der dritte Drehantrieb wäre der um eine Vertikalachse drehbare Werkzeugtisch 10) und die Bearbeitungsachse 53 angesteuert werden, um ein auf dem Werkstücktisch 10 befestigtes Werkstück mit einem an dem Werkzeugkopf 21 befestigten Werkzeug abspanend zu bearbeiten. Dabei kann die gesteuerte Bearbeitung eines Werkstücks während einer Bewegung von Werkzeugtisch 10 oder Werkzeugkopf 21 als solchem von statten gehen, also zu einer Zeit, wenn ein oder mehrere Antriebe von einem oder mehreren der Bewegungsachsen aktiviert ist/sind. Insbesondere kann also die Bearbeitung bei einem Übergang von positiven zu negativen Bearbeitungswinkeln stufenlos vorgesehen sein. Es ist dabei eine simultane Bearbeitung von einer Ausrichtung vertikal gemäss Fig. 2 bis Ausrichtung negativ gemäss Fig. 4 möglich.

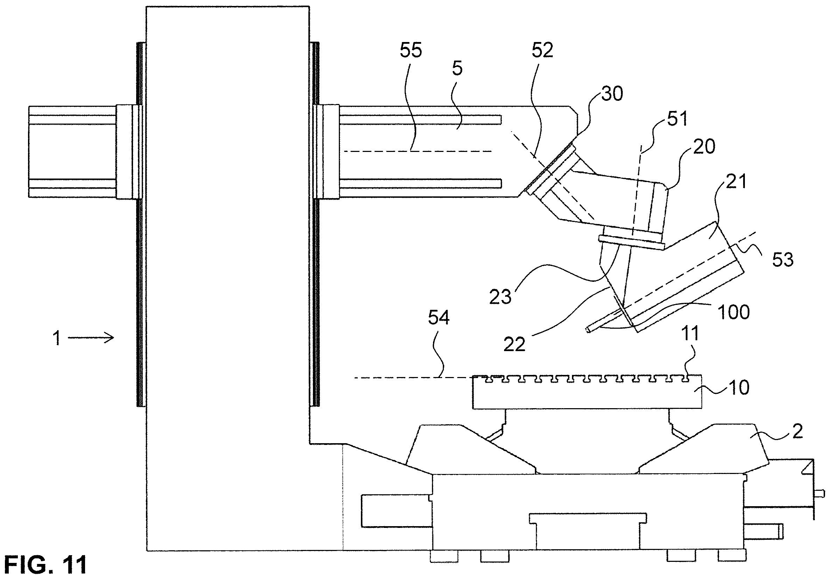

Die Fig. 11 zeigt eine Seitenansicht einer weiteren gegenüber der Fig. 1 leicht abgewandelten Werkzeugmaschine mit in einem anderen Winkel schräg ausgerichteten Winkelgehäuse. Die Winkelgehäuseachse 52 des Winkelgehäuses 20 ist in der Fig. 2 gegenüber der Horizontalen in einem geneigten Befestigungswinkel von 30 Grad angeordnet gewesen; jetzt hier in der Fig. 11 ist bei dem modifizierten Ausführungsbeispiel dieser Winkel zwischen der horizontalen Achse 55 des Balkens 5 und der Anflanschachse 52 zu 45 Grad ausgewählt worden. Damit sind die beiden bevorzugten Winkel zwischen 30 und 45 Grad dargestellt worden. Andere Ausführungsbeispiele liegen mit ihren Winkelbereichen zwischen 15 und 55 Grad und auch darüber hinaus, solange das Winkelgehäuse 20 mit einer Neigung grösser 0 Grad und kleiner 90 Grad an der Fläche 30 angeflanscht ist. Hier ist in der Verlängerung der Drehachse 53 eines Werkzeugs ein solches Werkzeug 100 eingezeichnet, dass über die Vorderseite 22 des Werkzeugkopfes 21 hinausragt. Wie bei der Fig. 2 sind hier der Winkel zwischen den Achsen 52 und 51 und der Winkel zwischen den Achsen 51 und 53 gleich, nämlich gleich 53 Grad.

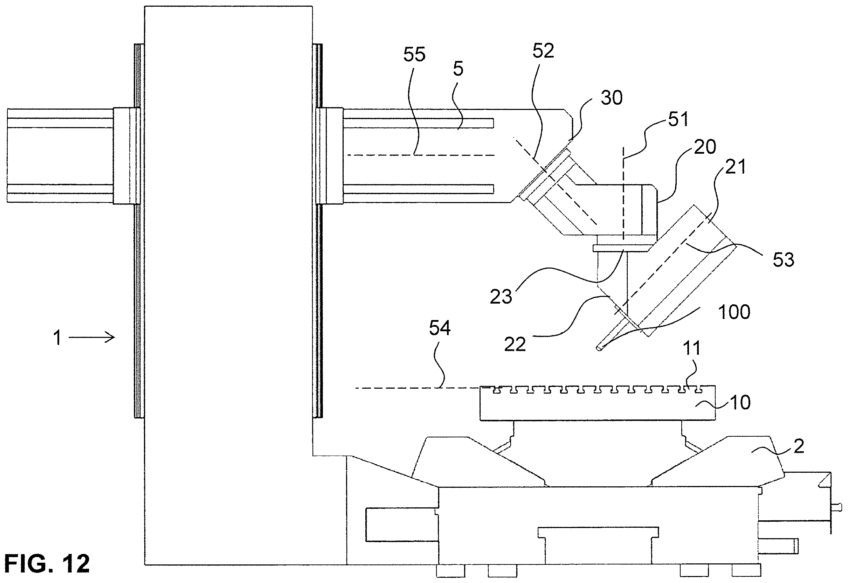

Die Fig. 12 zeigt eine Seitenansicht einer weiteren gegenüber der Fig. 11 leicht abgewandelten Werkzeugmaschine mit in einem anderen Winkel schräg ausgerichteten Winkelgehäuse 20. Die Winkelgehäuseachse 52 des Winkelgehäuses 20 ist hier wie in der Fig. 11 gegenüber der Horizontalen in einem geneigten Befestigungswinkel von 45 Grad angeordnet gewesen; dieser Winkel zwischen der horizontalen Achse 55 des Balkens 5 und der Anflanschachse 52 beträgt 45 Grad. In der Verlängerung der Drehachse 53 ist auch hier ein Werkzeug 100 eingezeichnet, dass über die Vorderseite 22 des Werkzeugkopfes 21 hinausragt. Wie bei der Fig. 2 bzw. Fig. 11 sind hier der Winkel zwischen den Achsen 52 und 51 und der Winkel zwischen den Achsen 51 und 53 gleich, allerdings hier gleich zu 45 Grad. Dieser identische Wert der Winkel zwischen den Achsen 52 und 51 und zwischen den Achsen 51 und 53 ist ungleich Null und kann vorteilhafterweise zwischen 30 und 60 Grad gewählt werden.

Das Winkelgehäuse 20 selber hat bei dem Ausführungsbeispiel nach der Fig. 12 andere Winkelverhältnisse. Bezogen auf die Winkel zwischen den Achsen 52 und 51, sowie zwischen den Achsen 51 und 53 in Fig. 11 hat die Ausführung nach der Fig. 12 jeweils eine 45°-Anordnung. Bis auf den Unterschied der Winkel in den Bauteilen 20 und 21 ist das Maschinenkonzept zwischen den Ausführungen nach Fig. 11 und 12 identisch. Zum einen sind jeweils bei allen Ausführungsbeispielen der Winkel zwischen Achse 51 und 52 gleich wie der Winkel Achse 51 und 53, damit stufenlos alle Positionen auf der als Modell herhaltenden Werkstück-Kugel angefahren werden können. Weiter ist ein Winkel zwischen Achse 52 und 55 vorhanden, damit die Achse 53 möglichst weit nach vorne geneigt werden kann. Dies bringt beim Bearbeiten von Werkstücken grosse Vorteile gegenüber dem Stand der Technik.

**BEZUGSZEICHENLISTE**

| | | | |
|---|---|---|---|
| 1 | Maschinenständer | 5 | Balken / horizontaler Kreuzschlitten |
| 2 | Konsole | | |
| 3 | vertikaler Kreuzschlitten | 10 | Werkstücktisch |
| 11 | T-Nut | | Anflanschfläche |
| 20 | Winkelgehäuse | 51 | Drehachse Fräskopf |
| 21 | Fräskopf | 52 | Drehachse Winkelgehäuse |
| 22 | Vorderseite des Fräskopfs | 53 | Drehachse Werkzeug |
| 23 | Vorderseite des Winkelgehäuses | 54 | Tischebene |
| | | 55 | Längsachse des Balkens |
| 30 | Verbindungs- / | 105 | spitzer Winkel |

## Patentansprüche

1. Werkzeugmaschine zur mehrachsigen Bearbeitung eines Werkstücks in einer Aufspannung umfassend einen Maschinenständer (1), einen am Maschinenständer (1) angeordneten Werkstücktisch (10), auf dessen Tischebene (54) ein zu bearbeitendes Werkstück befestigbar ist (11), und einen an dem Maschinenständer (1) befestigten Werkzeugkopfhalter (21), der für den Einsatz eines sich um eine Bearbeitungsachse (53) des Werkzeugkopfhalters (21) drehenden Werkzeuges (100) ausgestaltet ist, wobei der Werkzeugkopfhalter (21) in einer Relativbewegung gegenüber dem Werkstücktisch (10) in drei zueinander senkrecht verlaufenden Richtungen beweglich steuerbar verfahrbar ist, wobei ein Winkelgehäuse (20) an dem Maschinenständer (1) befestigt ist, wobei an einem Ende (23) des Winkelgehäuses (20) der Werkzeugkopfhalter (21) um eine Einstellungsachse (51) drehbar an dem Winkelgehäuse (20) befestigt ist, wobei das Winkelgehäuse (20) um eine Winkelgehäuseachse (52) drehbar an dem Maschinenständer (1) befestigt ist, wobei die Winkelgehäuseachse (52) in einem zur Tischebene (54) abweichenden geneigten Befestigungswinkel zwischen 10 und 80 Grad ausgerichtet ist, und wobei die Winkelgehäuseachse (52) und die Einstellungsachse (51) des Winkelgehäuses (20) in einem Winkel ungleich 0 Grad zueinander stehen, **dadurch gekennzeichnet, dass** der Winkel zwischen der Winkelgehäuseachse (52) und der Einstellungsachse (51) gleich ist zum Winkel zwischen der Einstellungsachse (51) und der Werkzeugdrehachse (53).

2. Werkzeugmaschine gemäss Anspruch 1, **dadurch gekennzeichnet, dass** der Werkzeugkopf (21) gegenüber dem Maschinenständer (1) in einer oder zwei der drei, und der Werkstücktisch (10) gegenüber dem Maschinenständer (1) in zwei beziehungsweise einer der drei zueinander senkrecht verlaufenden Richtungen (2 3, 4, 5) beweglich steuerbar verfahrbar ist.

3. Werkzeugmaschine gemäss Anspruch 1 oder 2, **dadurch gekennzeichnet, dass** die Winkelgehäuseachse (52) des Winkelgehäuses (20) gegenüber der Tischebene (54) einen geneigten Befestigungswinkel zwischen 30 und 60 Grad aufweist.

4. Werkzeugmaschine gemäss einem der Ansprüche 1 bis 3, **dadurch gekennzeichnet, dass** die Winkelgehäuseachse (52) des Winkelgehäuses (20) gegenüber der Tischebene (54) einen nach unten geneigten Befestigungswinkel aufweist.

5. Werkzeugmaschine gemäss einem der vorstehenden Ansprüche 1 bis 4, **dadurch gekennzeichnet, dass** die Winkelgehäuseachse (52) des Winkelgehäuses (20) und die Einstellungsachse (51) des Winkelgehäuses (20) in einer Ebene des Winkelgehäuses (20) angeordnet sind.

6. Werkzeugmaschine gemäss einem der vorstehenden Ansprüche 1 bis 5, **dadurch gekennzeichnet, dass** die Winkelgehäuseachse (52) des Winkelgehäuses (20) und die Einstellungsachse (51) des Winkelgehäuses (20) windschief zueinander angeordnet sind.

7. Werkzeugmaschine gemäss einem der vorstehenden Ansprüche 1 bis 6, **dadurch gekennzeichnet, dass** die Winkelgehäuseachse (52) des Winkelgehäuses (20) die Bearbeitungsachse (53) des Werkzeugkopfhalters (21) im Bereich dessen vorderer Endfläche (22) schneidet.

8. Werkzeugmaschine gemäss einem der vorstehenden Ansprüche 1 bis 7, **dadurch gekennzeichnet, dass** der Werkzeugtisch (10) für eine Rotation um eine Drehachse (100) rechtwinklig zur Tischebene (54) ausgestaltet ist.

## Claims

1. Machine tool for multi-axis machining of a workpiece in one clamping, comprising a machine column (1), a workpiece table (10) which is arranged on the machine column (1) and on the table plane (54) of which a workpiece (11) to be machined can be fastened, and a tool head holder (21) which is fastened to the machine column (1), which is designed for the use of a tool (100) rotating about a machining axis (53) of the tool head holder (21), wherein the tool head holder (21) is controllably movable in a relative movement with respect to the workpiece table (10) in three directions extending perpendicular to one another, wherein an angular housing (20) is attached to the machine column (1), wherein at one end (23) of the angular housing (20) the tool head holder (21) is fastened to the angular housing (20) so as to be rotatable about an adjustment axis (51), wherein the angular housing (20) is fastened to the machine column (1) so as to be rotatable about an angular housing axis (52), wherein the angular housing axis (52) is oriented at an inclined fastening angle of between 10 and 80 degrees deviating from the table plane (54), and wherein the angular housing axis (52) and the adjustment axis (51) of the angular housing (20) are at an angle other than 0 degrees to each other, **characterised in that** the angle between the angular housing axis (52) and the adjustment axis (51) is equal to the angle between the adjustment axis (51) and the tool rotation axis (53).

2. Machine tool according to claim 1, **characterised in that** the tool head (21) is movable controllably relative to the machine column (1) in one or two of the three, and the workpiece table (10) is movable controllably relative to the machine column (1) in two or one of the three mutually perpendicular directions (2, 3, 4, 5).

3. Machine tool according to claim 1 or 2, **characterised in that** the angular housing axis (52) of the angular housing (20) has an inclined mounting angle of between 30 and 60 degrees relative to the table plane (54).

4. Machine tool according to any one of claims 1 to 3, **characterised in that** the angular housing axis (52) of the angular housing (20) has a downwardly inclined mounting angle relative to the table plane (54).

5. Machine tool according to any one of the preceding claims 1 to 4, **characterised in that** the angular housing axis (52) of the angular housing (20) and the adjustment axis (51) of the angular housing (20) are arranged in one plane of the angular housing (20).

6. Machine tool according to any one of the preceding claims 1 to 5, **characterised in that** the angular housing axis (52) of the angular housing (20) and the adjustment axis (51) of the angular housing (20) are arranged at an warped angle to one another.

7. Machine tool according to any one of the preceding claims 1 to 6, **characterised in that** the angular housing axis (52) of the angular housing (20) intersects the machining axis (53) of the tool head holder (21) in the region of its front end face (22).

8. Machine tool according to any one of the preceding claims 1 to 7, **characterised in that** the tool table (10) is designed for rotation about an axis of rotation (100) at right angles to the table plane (54).

## Revendications

1. Machine-outil pour l'usinage multiaxial d'une pièce en un seul serrage, comprenant un bâti de machine (1), une table porte-pièce (10) disposée sur le bâti de machine (1), sur le plan de table (54) de laquelle une pièce à usiner peut être fixée (11), et un support de tête d'outil (21) fixé sur le bâti de machine (1), qui est conçu pour l'utilisation d'un outil (100) tournant autour d'un axe d'usinage (53) du support de tête d'outil (21), le support de tête d'outil (21) pouvant être déplacé de manière commandée et mobile dans un mouvement relatif par rapport à la table porte-pièce (10) dans trois directions s'étendant perpendiculairement les unes aux autres, un boîtier angulaire (20) étant fixé sur le bâti de machine (1), le support de tête d'outil (21) étant fixé au boîtier angulaire (20) à une extrémité (23) du boîtier angulaire (20) de manière à pouvoir tourner autour d'un axe de réglage (51), le boîtier angulaire (20) étant fixé au bâti de machine (1) de manière à pouvoir tourner autour d'un axe de boîtier angulaire (52), l'axe de boîtier angulaire (52) étant orienté selon un angle de fixation incliné entre 10 et 80 degrés s'écartant du plan de table (54), et dans lequel l'axe de boîtier angulaire (52) et l'axe de réglage (51) du boîtier angulaire (20) forment entre eux un angle différent de 0 degré, **caractérisé en ce que** l'angle entre l'axe de boîtier angulaire (52) et l'axe de réglage (51) est égal à l'angle entre l'axe de réglage (51) et l'axe de rotation de l'outil (53).

2. Machine-outil selon la revendication 1, **caractérisée en ce que** la tête d'outil (21) peut être déplacée de manière commandée et mobile par rapport au bâti de machine (1) dans une ou deux des trois directions (2 3, 4, 5) perpendiculaires entre elles, et **en ce que** la table porte-pièce (10) peut être déplacée de manière commandée et mobile par rapport au bâti de machine (1) dans deux ou une des trois directions (2 3, 4, 5) perpendiculaires entre elles.

3. Machine-outil selon la revendication 1 ou 2, **caractérisée en ce que** l'axe de boîtier angulaire (52) du boîtier angulaire (20) présente un angle de fixation incliné entre 30 et 60 degrés par rapport au plan de la table (54).

4. Machine-outil selon l'une des revendications 1 à 3, **caractérisée en ce que** l'axe de boîtier angulaire (52) du boîtier angulaire (20) présente un angle de fixation incliné vers le bas par rapport au plan de table (54).

5. Machine-outil selon l'une quelconque des revendications 1 à 4 ci-dessus, **caractérisée en ce que** l'axe de boîtier angulaire (52) du boîtier angulaire (20) et l'axe de réglage (51) du boîtier angulaire (20) sont situés dans un même plan du boîtier angulaire (20).

6. Machine-outil selon l'une quelconque des revendications 1 à 5 ci-dessus, **caractérisée en ce que** l'axe de boîtier angulaire (52) du boîtier angulaire (20) et l'axe de réglage (51) du boîtier angulaire (20) sont disposés de manière oblique l'un par rapport à l'autre.

7. Machine-outil selon l'une quelconque des revendications 1 à 6 ci-dessus, **caractérisée en ce que** l'axe de boîtier angulaire (52) du boîtier angulaire (20) coupe l'axe d'usinage (53) du support de tête d'outil (21) au niveau de sa face d'extrémité avant (22).

8. Machine-outil selon l'une quelconque des revendications 1 à 7 ci-dessus, **caractérisée en ce que** la table porte-pièce (10) est conçue pour tourner autour d'un axe de rotation (100) perpendiculaire au plan de table (54).
